# EUROPÄISCHE PATENTSCHRIFT

(11) **EP 3 458 806 B1**
(45) Veröffentlichungstag und Bekanntmachung des Hinweises auf die Patenterteilung: **28.01.2026**
(21) Anmeldenummer: 17748633.9
(22) Anmeldetag: 18.05.2017
(51) Int. Cl.: G01M 11/06, G01B 11/26, G01S 13/931, G01S 7/40, G01B 11/27, G01M 17/00, G01S 7/497

(54) **VORRICHTUNG ZUR KALIBRIERUNG EINES IN DIE WINDSCHUTZSCHEIBE EINES FAHRZEUGES INTEGRIERTEN UMFELDSENSORS**
DEVICE FOR CALIBRATING A PROXIMITY SENSOR INTEGRATED INTO THE WINDSCREEN OF A VEHICLE
DISPOSITIF D'ÉTALONNAGE D'UN CAPTEUR PÉRIPHÉRIQUE INTÉGRÉ DANS LE PARE-BRISE D'UN VÉHICULE

(30) Priorität: 19.05.2016 DE 202016102681 U; 05.07.2016 DE 202016103584 U
(43) Veröffentlichungstag der Anmeldung: 27.03.2019
(73) Patentinhaber: Hella Gutmann Solutions GmbH, 79241 Ihringen (DE)
(72) Erfinder: KOLBERG, Ralph, 79111 Freiburg Rieselfeld (DE); HOFMANN, Jürgen, 59519 Möhnesee-Körbecke (DE); BIERENSTIEL, Fabian, 79206 Breisach (DE); KOCH, Harro, 30974 Wennigsen/Deister (DE)
(74) Vertreter: Pfenning, Meinig & Partner mbB
(86) Internationale Anmeldenummer: PCT/DE2017/100432
(87) Internationale Veröffentlichungsnummer: WO 2017/198264

(56) Entgegenhaltungen:
- EP-A1- 1 260 832
- DE-A1- 102010 062 696
- DE-U1- 202015 008 954
- US-A- 5 491 553

## Beschreibung

Die Erfindung betrifft eine Vorrichtung zur Kalibrierung eines in die Windschutzscheibe eines Fahrzeuges integrierten Umfeldsensors, mit einer vor dem Fahrzeug in einem definierten Abstand, in einer definierten Höhe sowie in einem definierten Winkel zur fahrzeugführenden Fahrzeugachse des Fahrzeuges zu positionierenden Kalibriertafel, die mit einem aufgedruckten Kalibriertafeltarget versehen ist, wobei mittels wenigstens eines an den Rädern des Fahrzeuges zu befestigenden Radaufnehmers, der mit einem Laser verbunden ist, die Relativposition der Kalibriertafel zu der fahrzeugführenden Fahrzeugachse bestimmbar ist und anschließend mit dem Umfeldsensor ein Bild des Kalibriertafeltargets aufnehmbar ist und dann, mittels eines an den Umfeldsensor angeschlossenen Diagnosegerätes, ein Ist-Sollwert-Vergleich zwischen dem aufgenommenen Ist-Bild und einem hinterlegten Soll-Bild durchführbar ist und in Abhängigkeit hiervon eine Kalibrierung des Umfeldsensors vornehmbar ist.

Eine solche Vorrichtung ist bereits aus der WO 2012/076468 vorbekannt. Aus dieser internationalen Patentanmeldung ist bereits eine Vorrichtung und ein Verfahren zum Kalibrieren und Justieren eines Fahrzeug-Umfeldsensors bekannt. Dabei ist der eigentliche Vorgang zur Kalibrierung und Justierung des vorzugsweise in die Windschutzscheibe eines Fahrzeugs integrierten Umfeldsensors durch einen einfachen Ist-Sollwert-Vergleich vergleichsweise schnell durchzuführen. Etwaige Ungenauigkeiten in diesem Zusammenhang beeinträchtigen im Weiteren die Leistungsfähigkeit des Umfeldsensors und stellen, insbesondere in Verbindung mit autonomen Fahrsystemen, eine erhebliche Gefährdung dar. Bei dem vorbekannten Verfahren muss zusätzlich die Position und Ausrichtung des Fahrzeuges im Raum ermittelt werden, was mit zusätzlichem Aufwand und Sensoren geleistet werden muss.

Allen bislang vorbekannten Verfahren ist es gemein, dass die Kalibrierung eines in eine Windschutzscheibe integrierten Umfeldsensors es bislang jeweils erforderlich machte, eine Fachwerkstatt aufzusuchen, in der nach lagerichtiger Ausrichtung des Fahrzeuges vor einer Kalibriertafel i.V.m. einem Diagnosegerät und oftmals i.V.m. dem erheblichen Zusatzaufwand der Vermessung der Hinterachse, dann eine Kalibrierung des Umfeldsensors vorgenommen werden konnte. In den meisten Fällen ist aber eine Kalibrierung des Umfeldsensors nicht etwa infolge eines schweren Unfalls i.V.m. einer möglichen Beschädigung der Hinterachse eines Fahrzeuges erforderlich, sondern bereits nach vergleichsweise leichten Beschädigungen der Windschutzscheibe, etwa infolge eines Steinschlages, der das Auswechseln der Windschutzscheibe erforderlich macht. In diesem Zusammenhang muss dann auch der in die Windschutzscheibe integrierte oder mit der Windschutzscheibe sonstig verbundene Umfeldsensor neu kalibriert werden. In den letzten Jahren sind Verfahren bekannt geworden, bei denen der Austausch einer Windschutzscheibe oder auch deren Reparatur nicht mehr zwingend in einer Werkstatt, sondern gegebenenfalls auch vor Ort vorgenommen werden kann, indem ein Servicefahrzeug, das mit den entsprechenden Reparaturmöglichkeiten für eine beschädigte Windschutzscheibe versehen ist, entweder die Reparatur oder den Austausch der Windschutzscheibe des Fahrzeuges direkt vor Ort vornimmt. I.V.m. diesen Lösungen wäre es begrüßenswert, wenn im Zusammenhang mit dieser mobilen Reparatur auch gleichzeitig die nach der Reparatur oder dem Austausch der Windschutzscheibe erforderliche Neujustierung oder -kalibrierung des in die Windschutzscheibe integrierten oder mit der Windschutzscheibe verbundenen Umfeldsensors ebenfalls direkt vor Ort vorgenommen werden könnte. Außerdem offenbart die DE 20 2015 008 954 U1 eine Vorrichtung zur Kalibrierung von Assistenzsystemen von Fahrzeugen.

Die der Erfindung zu Grunde liegende Aufgabe wird durch eine Vorrichtung gemäß den Merkmalen des geltenden Anspruchs 1 gelöst. Vorteilhafte Ausgestaltungen der erfindungsgemäßen Lösung können den abhängigen Ansprüchen entnommen werden.

Gemäß Anspruch 1 ist die im Zusammenhang mit der Kalibrierung des Umfeldsensors eingesetzte Kalibriertafel als mobile, d.h. transportierbare Einheit ausgebildet. Hierzu besteht die Kalibriertafel aus zwei höhenverstellbaren Stativen zur Auflagerung eines Tragwerkes, an dem mittig die Kalibriertafel befestigbar ist, wobei beidseitig im Abstand von der Kalibriertafel je eine Mess-Skala befestigt ist. Diese Kalibriertafel ist dann in einer definierten Relativposition vor dem Fahrzeug, insbesondere im Bezug zur ungelenkten Fahrzeugachse des Fahrzeuges positionierbar.

Zusätzlich zu dieser mobil in einem Servicefahrzeug mitzuführenden, zunächst in ihre Einzelteile zerlegten, Kalibriertafel ist in dem Servicefahrzeug jeweils noch mindestens ein Radaufnehmer mitzuführen, der bestimmungsgemäß an der Vorderachse des Fahrzeuges zu positionieren ist, wobei der Radaufnehmer mit jeweils einem Laser versehen ist, der derart ausrichtbar ist, dass dieser Laser auf je eine der Mess-Skalen ausgerichtet ist. In verbesserter Ausführung werden in dem Servicefahrzeug aber jeweils zwei Radaufnehmer mitgeführt, die zunächst an je einem Vorderrad der Vorderachse des Fahrzeuges befestigbar sind, wobei anschließend die beiden Laser der Radaufnehmer so ausgerichtet werden, dass je ein Laser auf je eine der beiden mit dem Tragwerk verbundenen Mess-Skalen ausgerichtet ist.

In einem weiteren Schritt wird dann, etwa mittels eines Maßbandes, der Abstand der Kalibriertafelebene zum Radmittelpunkt der Vorderräder des Fahrzeuges vermessen und mittels je einer beidseits der Kalibriertafel angeordneten, zu dieser jeweils orthogonal ausgerichteten und jeweils mit den beiden Stativen verbundenen Schiebeschiene die Kalibriertafelebene in einem definierten Abstand parallel zur Fahrzeugachse bzw. Fahrzeugfront ausgerichtet werden.

Dabei wird der insoweit einzustellende und einzurichtende definierte Abstand zwischen der Kalibriertafelebene und der Vorderachse des Fahrzeuges von dem mit dem Umfeldsensor des Fahrzeugs verbundenen Diagnosegerät vorgegeben.

In vorteilhafter Ausgestaltung ist das mit den Stativen verbundene Tragwerk der Kalibriertafel mit einem Höhenstandsmesser versehen, so dass mittels dieses Höhenstandsmessers die relative Höhe der Kalibriertafel über der Aufstellfläche des Fahrzeuges, die zumeist gleichzeitig die Aufstellfläche der Kalibriertafel ist, ermittelt werden kann.

In weiterer Ausgestaltung der erfindungsgemäßen Lösung sind die Stative zur Auflagerung des Tragwerks jeweils mit einer Höhenverstelleinrichtung versehen, so dass die bestimmungsgemäße Höhe des Tragwerks und damit auch der Kalibriertafel in einfacher Weise vor Ort einstellbar ist.

In abermals vorteilhafter Ausgestaltung der Erfindung ist das Tragwerk jeweils mit einer Horizontal-Libelle versehen, mittels derer die an dem Tragwerk zu befestigende Kalibriertafel horizontal ausrichtbar ist.

In einem weiteren Arbeitsschritt werden dann die beiden Radaufnehmer, die bislang mit den Vorderrädern der Vorderachse des Fahrzeuges verbunden waren, auf die Hinterräder der Hinterachse des Fahrzeuges umgesetzt und im weiteren die mit den Radaufnehmern jeweils verbundenen Laser auf die beidseits der Kalibriertafel angeordneten Mess-Skalen ausgerichtet. Dabei sind die Mess-Skalen mit einer Skala versehen, so dass wenn die Laserstrahlen der beiden Laser beide auf denselben Skalenwert der Mess-Skalen auftreffen, sichergestellt ist, dass die Kalibriertafel exakt mittig vor dem Fahrzeug angeordnet ist. Hierzu sind das Tragwerk und demnach auch die mit dem Tragwerk verbundene Kalibriertafel auf den Stativen längsverschieblich aufgelagert. Dementsprechend wird nun das längsverschiebliche Tragwerk so ausgerichtet, dass die besagten Laserstrahlen auf den mit dem Tragwerk verbundenen Mess-Skalen jeweils denselben Wert anzeigen und anschließend das Tragwerk in dieser mittigen Relativposition vor dem Fahrzeug mittels entsprechender Feststellschrauben fixiert ist.

Zusätzlich sind die mit dem Tragwerk verbundenen Mess-Skalen jeweils mit einer Spiegelfläche versehen. Auf diese Spiegelfläche werden nunmehr die mit den an der Hinterachse an den beiden Hinterrädern beidseits befestigten Laser der Radaufnehmer ausgerichtet, und zwar so, dass die Laserstrahlen von diesen Spiegelflächen jeweils auf mit den Radaufnehmern verbundene Radaufnehmer-Mess-Skalen reflektiert werden.

Im Weiteren wird dann mittels der bereits vorstehend erwähnten, zur Kalibriertafel orthogonal ausgerichteten, Schiebeschienen des Tragwerks das Tragwerk und damit auch die mit dem Tragwerk verbundene Kalibriertafel so lange verschwenkt bzw. relativ zur Hinterachse des Fahrzeuges verdreht, bis die reflektierten Laserstrahlen jeweils auf denselben Wert der Radaufnehmer-Mess-Skalen reflektiert werden, was damit gleichbedeutend ist, dass dann die Kalibriertafelebene parallel zur ungelenkten Hinterachse des Fahrzeuges ausgerichtet ist.

Nachdem somit das auf den beiden Stativen aufgelagerte Tragwerk bestimmungsgemäß zum Fahrzeug ausgerichtet ist, kann anschließend eine herstellerspezifische Kalibriertafel mit aufgedrucktem Kalibriertafeltarget an dem Tragwerk befestigt werden, wobei die lagerichtige Ausrichtung der Kalibriertafel und damit auch des Kalibriertafeltargets mittels einer an dem Tragwerk verbundenen Vertikal-Libelle überprüfbar ist, mithin das Kalibriertafeltarget lotrecht vor dem Fahrzeug aufgerichtet und befestigt ist.

Nach dieser bestimmungsgemäßen Anordnung der Kalibriertafel relativ zu dem Fahrzeug, kann dann mittels des an dem Umfeldsensor angeschlossenen Diagnosegerätes die Kalibrierung und erforderlicherweise Justierung des Umfeldsensors direkt vor Ort in herkömmlicher Weise vorgenommen werden.

Die Erfindung wird nachstehend anhand eines in der Zeichnung nur schematisch dargestellten Ausführungsbeispiels näher erläutert:

### Es zeigen:

- Fig. 1:: eine mobile Vorrichtung zur Kalibierung in einer Rückansicht,
- Fig. 2:: ein Detail der in Figur 1 gezeigten mobilen Vorrichtung in einer perspektivischen Ansicht,
- Fig. 3:: ein weiteres Detail der in Figur 1 gezeigten mobilen Vorrichtung in einer perspektivischen Ansicht,
- Fig.4:: einen Radaufnehmer in einer perspektivischen Ansicht und
- Fig. 5:: ein vor der mobilen Vorrichtung zur Kalibrierung angeordnetes Fahrzeug in einer Ansicht von oben.

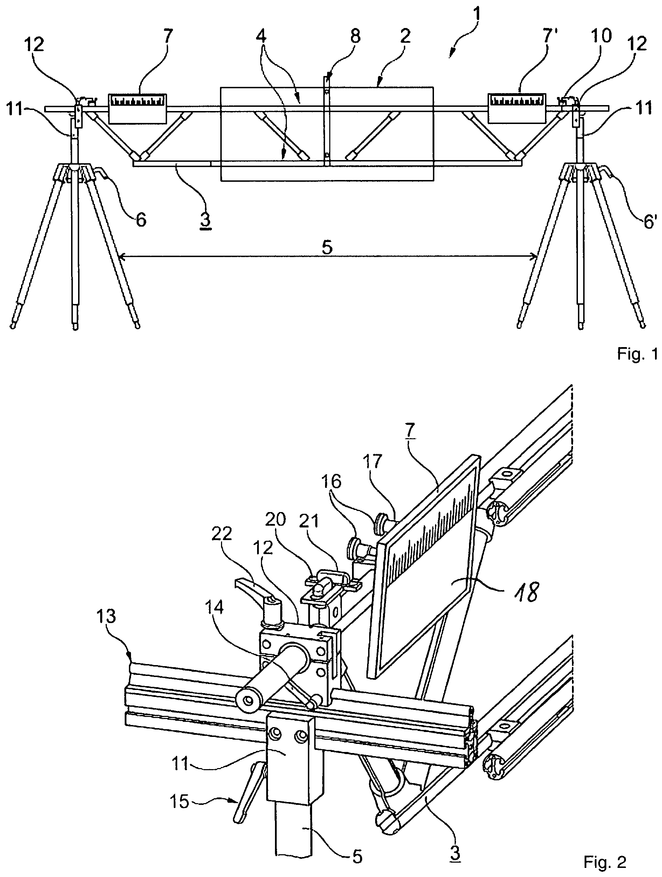

Figur 1 zeigt in einer Rückansicht eine Kalibriertafel 2, die als mobile Vorrichtung 1 ausgebildet ist und dementsprechend aus mehreren Einzelteilen besteht, die dann vor Ort montiert werden. Im Einzelnen besteht die Kalibriertafel 2 aus einem üblicherweise herstellerspezifischen Kalibriertafeltarget, das an einem Tragwerk 3 befestigbar ist. Dieses Tragwerk 3 besteht im Wesentlichen aus zwei Querträgern 4, die sich über eine fachwerkartige Konstruktion miteinander zu dem Tragwerk 3 ergänzen. Dabei ist dieses Tragwerk 3 auf zwei Stativen 5 aufgelagert. Die beiden Stative 5 sind jeweils über eine Höhenverstellung 6, 6' höhenverstellbar ausgebildet.

An dem oberen Querträger 4 sind zwei Mess-Skalen 7, 7' äquidistant von dem mittig an dem Tragwerk 3 befestigten Kalibriertafeltarget beabstandet angeordnet. **Im** Übrigen ist an dem oberen Querträger 4 eine Befestigungsvorrichtung 10 für einen hier nicht weiter dargestellten Höhenstandsmesser befestigt.

**Im** Übrigen weisen die beiden Stative 5 jeweils einen unteren Lagerbock 11 und einen oberen Lagerbock 12 zur Verbindung der Stative 5 mit dem Tragwerk 3 auf.

Gemäß der perspektivischen Detailansicht in Figur 2 ist das Tragwerk 3 über den unteren Lagerbock 11 und den oberen Lagerbock 12 unter Zwischenlage der Schiebeschiene 13 jeweils mit den Stativen 5 verbunden. Dabei ist die Schiebeschiene 13 jeweils orthogonal zur Kalibriertafelebene angeordnet, so dass über die beidseitig auf den beiden Stativen 5 angeordneten Schiebeschienen 13 die Kalibriertafelebene verschwenkbar ist. Dabei wird die Ausrichtung des Tragwerks 3 bzw. der Kalibriertafelebene dadurch realisiert, dass der obere Lagerbock 12 auf der Schiebeschiene 13 längsverschieblich gelagert ist und in der jeweils gewünschten Relativposition mittels der Fixierschraube 14 fixierbar ist. Der untere Lagerbock 11 ist seinerseits mittels der Feststellkurbel 15 in seiner Relativposition gegenüber dem Stativ 5 fixierbar. An dem oberen Querträger 4 des Tragwerks 3 ist mittels der beiden Feststellschrauben 16 eine der beiden Mess-Skalen 7, 7' befestigt. **Im** Einzelnen umfasst die Mess-Skala 7, 7' eine Abstandsskala 17 und eine gegebenenfalls abdeckbare Spiegelfläche 18. **Im** Übrigen ist der obere Querträger 4 des Tragwerks 3 mit einer Horizontal- 20 und einer Vertikal-Libelle 21 versehen.

Außerdem ist der obere Querträger 4 des Tragwerks 3 durch eine Durchführung des oberen Lagerbocks 12 geführt und somit zum einen zwischen den beiden Stativen 5 längsverschieblich und im Übrigen auch verschwenkbar gelagert, so dass hierdurch die lotrechte Aufstellung der Kalibriertafel 2 und deren lagerichtige Ausrichtung sichergestellt werden kann. Sobald die Kalibriertafel 2 bestimmungsgemäß ausgerichtet ist, kann der obere Querträger 4 und damit das Tragwerk 3 in der bestimmungsgemäßen Position mittels des Befestigungsgriffes 22 fixiert werden.

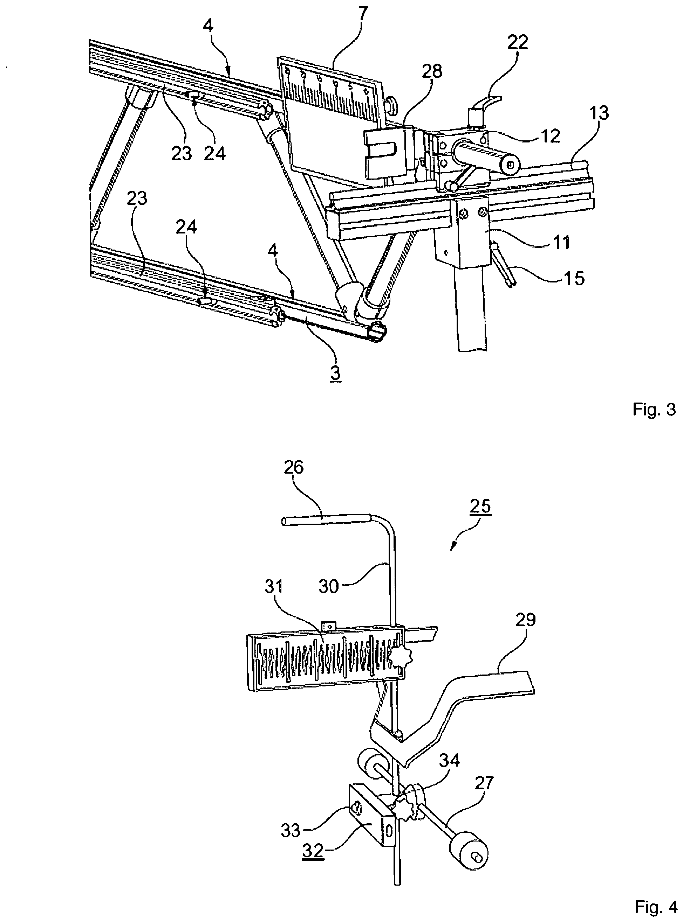

Gemäß der perspektivischen Darstellung in Figur 3 ist sowohl an dem oberen Querträger 4 als auch an dem unteren Querträger 4 des Tragwerks 3 je eine Befestigungsschiene 23 angebracht, in denen Haltestifte 24 längsverschieblich angeordnet sind, so dass mittels eines Codierstiftes 8 und dieser Haltestifte 24 das Kalibriertafeltarget 2 längsverschieblich mit dieser Schienenanordnung verbunden werden kann. Im Übrigen zeigt Figur 3 die mit dem oberen Querträger 4 des Tragwerks 3 verbundene Befestigungsvorrichtung 10 für einen hier nicht weiter dargestellten Höhenstandsmesser, der an einer hierzu vorgesehenen Höhenstandsmesserhalterung 28 befestigbar ist.

Außerdem umfasst die erfindungsgemäße Vorrichtung gemäß Figur 4 wenigstens einen Radaufnehmer 25 mit einem abgewinkelten Haltegriff 26, über den der Radaufnehmer 25 derart auf ein Fahrzeugrad aufsetzbar ist, dass die Halteflügel 29 auf dem Rad aufliegen so, dass der Radaufnehmer 25 beabstandet um die Pufferstrebe 27 an der Felge oder dem Reifen anliegt, wobei an einer Haltestange 30 des Radaufnehmers 25 auf der dem Fahrzeugrad abgewandten Seite zusätzlich eine Radaufnehmer-Mess-Skala 31 höhenverstellbar und ein Laser 32 verschwenkbar befestigt sind. Dabei ist der Laser 32 mit einem Ein/Aus-Schalter 33, sowie mit einer Befestigungsvorrichtung 34 für ein Maßband zur Abstandsmessung versehen.

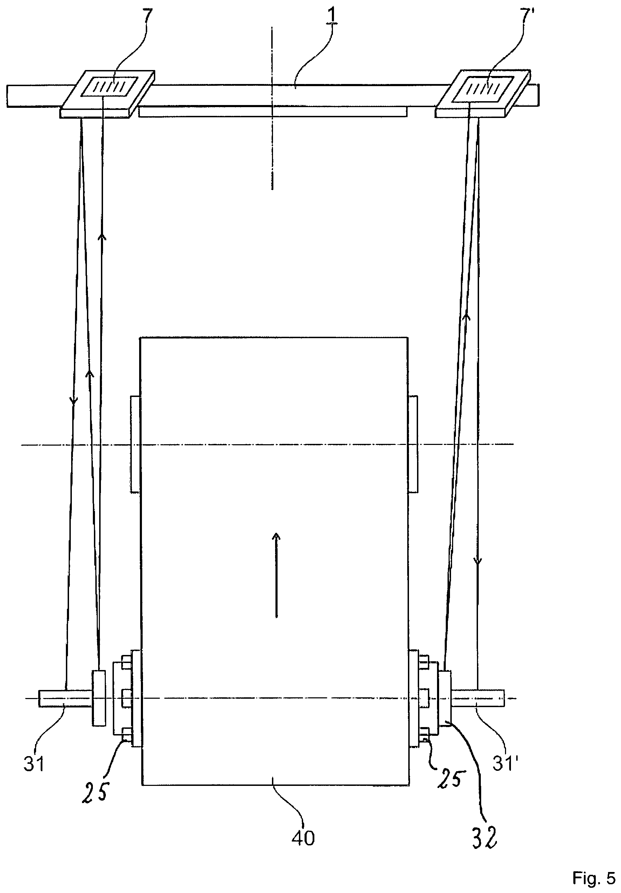

Figur 5 zeigt schließlich die bestimmungsgemäße Anordnung der erfindungsgemäßen Vorrichtung 1 derart, dass die Kalibriertafel 2 in einem definierten Abstand vor einem Fahrzeug 40 angeordnet ist, wobei je ein Radaufnehmer 25 mittels der Halteflügel 29 an je einem Hinterrad, also der fahrzeugführenden Fahrzeugachse befestigt sind, wobei die beiden Laser 32, die mit den bestimmungsgemäß befestigten Radaufnehmern 25 verbunden sind, jeweils eingeschaltet sind und in einem ersten Schritt jeweils auf Abstandsskalen 17 der Kalibriertafel 2 ausgerichtet werden und anschließend durch Verschieben des Tragwerks 3 der Kalibriertafel 2, diese so ausgerichtet wird, dass das Fahrzeug 40 mittig vor der Kalibriertafel 2 positioniert ist. Dies ist dann der Fall, wenn die beiden Laser 32 jeweils auf den gleichen Zahlenwert der Abstandsskalen 17 einstrahlen. In einem zweiten Schritt muss dann die parallele Ausrichtung der Fahrzeugquerachse zur Kalibriertafel 2 sichergestellt werden. Hierzu werden nun die Laser 32 so ausgerichtet, dass sie jeweils auf die Spiegelflächen 18 der an dem oberen Querträger 4 befestigten Mess-Skalen 7, 7' einstrahlen und dort reflektiert werden, so dass die Laserstrahlen auf die Radaufnehmer-Mess-Skalen 31 zurückgeworfen werden, wobei, wenn an beiden Radaufnehmer-Mess-Skalen 31 der gleiche Wert angezeigt wird und gemäß den vorstehenden Ausführungen die Kalibriertafel 2 ordnungsgemäß aufgestellt wurde, die Kalibiertafel 2 ordnungsgemäß vor dem Fahrzeug 40 positioniert ist. Anschließend kann dann die Kalibrierung des in die Windschutzscheibe integrierten oder mit der Windschutzscheibe verbundenen Umfeldsensors mittels des mit dem Umfeldsensor verbundenen Diagnosegeräts durchgeführt werden.

Vorstehend ist somit eine mobile, d.h. transportierbare Vorrichtung zur Kalibrierung 1 eines in eine Windschutzscheibe integrierten oder mit einer Windschutzscheibe verbundenen Umfeldsensors erläutert, die den Vorteil bietet, dass die Kalibrierung des Umfeldsensors außerhalb einer Werkstatt, unmittelbar an dem jeweiligen Fahrzeug 40 vorgenommen werden kann, wenn zuvor die erfindungsgemäße Vorrichtung 1 mittels eines Servicefahrzeuges zu dem Fahrzeug gebracht wurde und dort gemäß den vorstehenden Ausführungen installiert wurde.

**BEZUGSZEICHENLISTE**

| | | | |
|---|---|---|---|
| 1 | Vorrichtung zur Kalibrierung | 20 | Horizontal-Libelle |
| 2 | Kalibriertafel | 21 | Vertikal-Libelle |
| 3 | Tragwerk | 22 | Befestigungsgriff |
| 4 | Querträger | 23 | Befestigungsschiene |
| 5 | Stativ | 24 | Haltestifte |
| 6, 6' | Höhenverstellung | 25 | Radaufnehmer |
| 7, 7' | Mess-Skala | 26 | Haltegriff |
| 8 | Codierstift | 27 | Pufferstrebe |
| | | 28 | Höhenstandsmesser-Halterung |
| | | 29 | Halteflügel |
| 10 | Befestigungsvorrichtung für Höhenstandsmesser | 30 | Haltestange |
| | | 31 | Radaufnehmer-Mess-Skala |
| 11 | unterer Lagerbock | 32 | Laser |
| 12 | oberer Lagerbock | 33 | Ein/Aus-Schalter |
| 13 | Schiebeschiene | 34 | Befestigungsvorrichtung |
| 14 | Fixierschraube | | |
| 15 | Feststellkurbel | 40 | Fahrzeug |
| 16 | Feststellschraube | | |
| 17 | Abstandsskala | | |
| 18 | Spiegelfläche | | |

## Patentansprüche

1. Vorrichtung zur Kalibrierung (1) eines in die Windschutzscheibe eines Fahrzeuges (40) integrierten Umfeldsensors, wobei die Vorrichtung eine Kalibriertafel, mindestens einen Radaufnehmer (25) und mindestens einen Laser (32) aufweist,
wobei die Kalibriertafel vor dem Fahrzeug (40) in einem definierten Abstand, in einer definierten Höhe sowie in einem definierten Winkel zur ungelenkten Fahrzeugachse des Fahrzeuges (40) positionierbar ist und mit einem aufgedruckten Kalibriertafeltarget versehen ist, wobei mittels des wenigstens einen an den Rädern des Fahrzeuges (40) zu befestigenden Radaufnehmers (25), der mit dem Laser (32) verbunden ist, die Relativposition der Kalibriertafel (2) zu der ungelenkten Fahrzeugachse bestimmbar ist und anschließend mit dem Umfeldsensor ein Bild des Kalibriertafeltargets aufnehmbar ist und dann, mittels eines an den Umfeldsensor angeschlossenen Diagnosegerätes, ein Ist-Sollwert-Vergleich zwischen dem aufgenommenen Ist-Bild und einem hinterlegten Soll-Bild durchführbar ist und in Abhängigkeit hiervon eine Kalibrierung des Umfeldsensors vornehmbar ist,
**dadurch gekennzeichnet,**
**dass** die Vorrichtung zwei höhenverstellbare Stative (5), ein Tragwerk (3), zwei Schiebeschienen (13, 13') und zwei Mess-Skalen (7, 7') umfasst, wobei die Kalibriertafel (2) vor Ort mittels der höhenverstellbaren Stative (5) zur Auflagerung des zwischen den Stativen (5) aufgelagerten Tragwerkes (3), an dem, vorzugsweise mittig, die Kalibriertafel (2) und die zwei beidseits der Kalibriertafel (2), in jeweils gleichem Abstand von der Kalibriertafel (2) angeordneten, Mess-Skalen (7, 7') befestigt sind, vor dem Fahrzeug (40) in der definierten Relativposition zu der ungelenkten Fahrzeugachse positionierbar ist, wobei jeweils der Abstand der Kalibriertafelebene zu den Radmittelpunkten der Vorderräder messbar ist, etwa mittels eines Maßbandes, und mittels der jeweils beidseits der Kalibriertafel (2) angeordneten, zu dieser jeweils orthogonal ausgerichteten, jeweils mit den Stativen (5) verbundenen Schiebeschienen (13, 13') die Kalibriertafelebene in einem definierten Abstand parallel zur Fahrzeugvorderachse ausrichtbar ist, wobei das Tragwerk (3) unter Zwischenlage der Schiebeschienen (13, 13') mit den Stativen (5) verbunden ist.

2. Vorrichtung (1) nach Anspruch 1, **dadurch gekennzeichnet, dass** an den Rädern der Vorderachse des Fahrzeuges (40) je ein Radaufnehmer (25) mit jeweils einem Laser (32) befestigbar ist und diese Laser (32) jeweils derart ausrichtbar sind, dass je ein Laser (32) auf je eine der Mess-Skalen (7, 7') ausgerichtet ist.

3. Vorrichtung (1) nach Anspruch 1 oder 2, **dadurch gekennzeichnet, dass** der definierte Abstand zwischen der Kalibriertafelebene und der Fahrzeugvorderachse von dem mit dem Umfeldsensor verbundenen Diagnosegerät vorgegeben ist.

4. Vorrichtung (1) nach einem oder mehreren der vorhergehenden Ansprüche, **dadurch gekennzeichnet, dass** das Tragwerk (3) mit einem Höhenstandsmesser versehen ist und hierdurch die relative Höhe der Kalibriertafel (1) über der Aufstellfläche des Fahrzeuges (40) ermittelbar ist.

5. Vorrichtung (1) nach Anspruch 4, **dadurch gekennzeichnet, dass** die Stative (5) zur beidseitigen Auflagerung des Tragwerks (3) jeweils mit einer Höhenverstelleinrichtung versehen sind.

6. Vorrichtung (1) nach Anspruch 4 oder 5, **dadurch gekennzeichnet, dass** das Tragwerk (3) jeweils mit mindestens einer Horizontal-Libelle (20) versehen ist, mittels derer die an dem Tragwerk (3) zu befestigende Kalibriertafel (2) horizontal ausrichtbar ist.

7. Vorrichtung (1) nach einem oder mehreren der vorhergehenden Ansprüche, **dadurch gekennzeichnet, dass** im weiteren je einer der beiden Radaufnehmer (25) auf die Hinterräder der Hinterachse des Fahrzeuges (40) aufsetzbar ist und die mit dem Radaufnehmer (25) jeweils verbundenen Laser (32) auf die beidseits der Kalibriertafel (2) angeordneten Mess-Skalen (7, 7') ausrichtbar sind und das längsverschieblich auf den Stativen (5) aufgelagerte Tragwerk (3) so ausrichtbar ist, dass das Tragwerk (3), mithin auch die mit dem Tragwerk (3) verbundene Kalibriertafel (2), exakt so ausgerichtet ist, dass die Kalibriertafel (2) mittig vor dem Fahrzeug (40) angeordnet ist, mithin die Laser (32) auf die jeweils selbe Abstandsangabe der beiden beidseits der Kalibriertafel (2) angeordneten Mess-Skalen (7, 7') einstrahlen und anschließend das Tragwerk (3), mithin die Kalibriertafel (2), in dieser Mittelposition vor dem Fahrzeug (40) mit entsprechenden Feststellschrauben (16) fixierbar ist.

8. Vorrichtung (1) nach Anspruch 7, **dadurch gekennzeichnet, dass** die beiden Mess-Skalen (7, 7') des Tragwerks (3) jeweils zusätzlich mit einer Spiegelfläche (18) versehen sind und die an den Hinterrädern der Hinterachse des Fahrzeuges (40) mittels der Radaufnehmer (25) angeordneten Laser (32) jeweils derart auf diese Spiegelflächen (18) ausrichtbar sind, dass die Laserstrahlen von diesen Spiegelflächen (18) jeweils auf die mit den Radaufnehmern (25) verbundenen Radaufnehmer-Mess-Skalen (7, 7') reflektiert werden, wobei mittels den zur Kalibriertafel (2) orthogonal ausgerichteten Schiebeschienen (13) das Tragwerk (3) so verstellbar ist, dass die reflektierten Laserstrahlen jeweils auf dieselbe Abstandsangabe der beiden Radaufnehmer-Mess-Skalen (7, 7') reflektiert werden, mithin die Kalibriertafelebene parallel zur ungelenkten Hinterachse des Fahrzeuges (40) ausgerichtet ist.

9. Vorrichtung (1) nach einem oder mehreren der vorhergehenden Ansprüche, **dadurch gekennzeichnet, dass** eine herstellerspezifische Kalibriertafel (2) an dem Tragwerk (3) befestigbar ist, wobei die lagerichtige Ausrichtung der Kalibriertafel (2), insbesondere deren lotrechte Ausrichtung, mittels wenigstens einer mit dem Tragwerk (3) verbundenen Vertikal-Libelle (21) überprüfbar ist.

## Claims

1. A device for calibrating (1) an environmental sensor integrated into the windscreen of a vehicle (40), the device comprising a calibration panel, at least one wheel sensor (25) and at least one laser (32),
the calibration panel being positionable in front of the vehicle (40) at a defined distance, at a defined height, and at a defined angle to the unsteered vehicle axle of the vehicle (40) and is provided with a printed calibration panel target, the position of the calibration panel (2) relative to the unsteered vehicle axle can be determined via at least one wheel sensor (25) to be attached to the wheels of the vehicle (40) and connected to the laser (32), and an image of the calibration panel target can subsequently be captured by the environmental sensor, and then, by using a diagnosis device connected to the environmental sensor, an actual/target value comparison can be carried out between the captured actual image and a stored target image, and depending on this, a calibration of the environmental sensor can be carried out,
**characterised in that**
the device comprises two height-adjustable tripods (5), a supporting structure (3), two sliding rails (13, 13') and two measuring scales (7, 7'), the calibration panel (2) being set up on site via the height-adjustable tripods (5) to support the supporting structure (3) fastened between the tripods (5), on which the measuring scales (7, 7'), preferably centrally, the calibration panel (2) and the two measuring scales (7, 7') are arranged on both sides of the calibration panel (2) each at an equal distance from the calibration panel (2), can be positioned in front of the vehicle (40) in the defined position relative to the unsteered vehicle axle, the distance between the plane of the calibration panel and the wheel centres of the front wheels can be measured, for example using a measuring tape, and using the sliding rails (13, 13') arranged on both sides of the calibration panel (2), which are aligned orthogonally to it and connected to the tripods (5), the plane of the calibration panel can be aligned at a defined distance parallel to the vehicle front axle, the supporting structure (3), interposed with the sliding rails (13, 13'), being connected to the tripods (5).

2. The device (1) according to claim 1, **characterised in that** a wheel sensor (25) with a laser (32) can be attached to each of the wheels of the front axle of the vehicle (40) and these lasers (32) can be aligned such that each laser (32) is aligned with one of the measuring scales (7, 7').

3. The device (1) according to claim 1 or 2, **characterised in that** the defined distance between the plane of the calibration panel and the vehicle front axle is specified by the diagnosis device connected to the environmental sensor.

4. The device (1) according to any one or more of the preceding claims, **characterised in that** the supporting structure (3) is provided with an altitude level meter, thus enabling the relative height of the calibration panel (1) above the vehicle's (40) standing surface to be determined.

5. The device (1) according to claim 4, **characterised in that** the tripods (5) for supporting the supporting structure (3) on both sides are each provided with a height adjustment device.

6. The device (1) according to claim 4 or 5, **characterised in that** the supporting structure (3) is provided with at least one horizontal vial (20) with which the calibration panel (2) to be attached to the supporting structure (3) can be horizontally aligned.

7. The device (1) according to any one or more of the preceding claims, **characterised in that**, in addition, each of the two wheel sensors (25) can be attached to the rear wheels of the rear axle of the vehicle (40) and the lasers (32) connected to the wheel sensors (25) can be aligned with the measuring scales (7, 7') arranged on both sides of the calibration panel (2), and the supporting structure (3), which is mounted on the tripods (5) so that it is movable lengthwise, can be aligned such that the supporting structure (3), and therefore also the calibration panel (2) connected to the supporting structure (3), is aligned precisely so that the calibration panel (2) is centrally arranged in front of the vehicle (40), meaning that the lasers (32) radiate from an equal distance onto the two measuring scales (7, 7') located on either side of the calibration panel (2), and subsequently the supporting structure (3), and thus the calibration panel (2), can be fixed in this central position in front of the vehicle (40) with corresponding locking screws (16).

8. The device (1) according to claim 7, **characterised in that** the two measuring scales (7, 7') of the supporting structure (3) are each additionally provided with a mirror surface (18) and the lasers (32) arranged on the rear wheels of the rear axle of the vehicle (40) via the wheel sensors (25) can each be aligned with these mirror surfaces (18) such that the laser beams are reflected from these mirror surfaces (18) onto the wheel sensor measuring scales (7, 7') connected to the wheel sensors (25), whereby the supporting structure (3) being adjustable via the sliding rails (13) aligned orthogonally to the calibration panel (2) such that the reflected laser beams are reflected at an equal distance onto the two wheel sensor measuring scales (7, 7'), thus aligning the plane of the calibration panel parallel to the unsteered rear axle of the vehicle (40).

9. The device (1) according to any one or more of the preceding claims, **characterised in that** a manufacturer-specific calibration panel (2) can be attached to the supporting structure (3), enabling the correct positional alignment of the calibration panel (2), in particular its vertical alignment, to be checked via at least one vertical vial (21) connected to the supporting structure (3).

## Revendications

1. Dispositif d'étalonnage (1) d'un capteur périphérique intégré dans le pare-brise d'un véhicule (40), dans lequel le dispositif comprend un tableau d'étalonnage, au moins un capteur de roue (25) et au moins un laser (32),
dans lequel le tableau d'étalonnage peut être positionné devant le véhicule (40) à une distance définie, à une hauteur définie ainsi qu'à un angle défini par rapport à l'essieu non-directeur du véhicule (40), et est muni d'une cible de tableau d'étalonnage imprimée, dans lequel la position relative du tableau d'étalonnage (2) par rapport à l'essieu non-directeur du véhicule peut être déterminée au moyen du au moins un capteur de roue (25) à fixer sur les roues du véhicule (40), qui est relié au laser (32), puis une image de la cible de tableau d'étalonnage peut être prise à l'aide du capteur périphérique et ensuite, au moyen d'un appareil de diagnostic connecté au capteur périphérique, une comparaison de la valeur réelle-de consigne entre l'image réelle capturée et une image de consigne enregistrée peut être effectuée et un étalonnage du capteur périphérique peut être effectué en fonction de celle-ci,
**caractérisé en ce que**
le dispositif comprend deux trépieds (5) réglables en hauteur, une structure porteuse (3), deux coulisses (13, 13') et deux échelles de mesure (7, 7'), dans lequel le tableau d'étalonnage (2) peut être positionné sur place au moyen des trépieds réglables en hauteur (5) pour supporter la structure porteuse (3) reposant entre les trépieds (5), au niveau de laquelle, de préférence au centre, le tableau d'étalonnage (2) et les deux échelles de mesure (7, 7') agencées des deux côtés du tableau d'étalonnage (2) à la même distance du tableau d'étalonnage (2), peuvent être positionnés devant le véhicule (40) dans la position relative définie par rapport à l'essieu non-directeur, dans lequel la distance du plan de tableau d'étalonnage par rapport aux points centraux de roue des roues avant peut être mesurée, par exemple au moyen d'une bande de mesure, et, au moyen des coulisses (13, 13') agencés des deux côtés du tableau d'étalonnage (2), respectivement orientées orthogonalement par rapport à ceux-ci, respectivement reliés aux trépieds (5), le plan de tableau d'étalonnage peut être orienté à une distance définie parallèlement à l'essieu avant, dans lequel la structure porteuse (3) est reliée aux trépieds (5) avec interposition des coulisses (13, 13').

2. Dispositif (1) selon la revendication 1, **caractérisé en ce que** respectivement un capteur de roue (25) comprenant respectivement un laser (32) peut être fixé sur les roues de l'essieu avant du véhicule (40), et **en ce que** ces lasers (32) peuvent être orientés respectivement de manière à ce que chaque laser (32) soit orienté sur une échelle de mesure (7, 7').

3. Dispositif (1) selon la revendication 1 ou 2, **caractérisé en ce que** la distance définie entre le plan de tableau d'étalonnage et l'essieu avant du véhicule est prédéfinie par l'appareil de diagnostic relié au capteur périphérique.

4. Dispositif (1) selon une ou plusieurs des revendications précédentes, **caractérisé en ce que** la structure porteuse (3) est munie d'un dispositif de mesure de hauteur et la hauteur relative du tableau d'étalonnage (1) au-dessus de la surface d'installation du véhicule (40) peut ainsi être déterminée.

5. Dispositif (1) selon la revendication 4, **caractérisé en ce que** les trépieds (5) sont pourvus d'un dispositif de réglage en hauteur pour un appui des deux côtés de la structure porteuse (3).

6. Dispositif (1) selon la revendication 4 ou 5, **caractérisé en ce que** la structure porteuse (3) est munie d'au moins un niveau à bulle horizontal (20) au moyen duquel le tableau d'étalonnage (2) à fixer à la structure porteuse (3) peut être orienté horizontalement.

7. Dispositif (1) selon une ou plusieurs des revendications précédentes, **caractérisé en outre en ce que** chacun des deux capteurs de roue (25) peut être monté sur les roues arrière de l'essieu arrière du véhicule (40) et les lasers (32) reliés respectivement au capteur de roue (25) peuvent être orientés sur les échelles de mesure (7, 7') disposées de part et d'autre du tableau d'étalonnage (2), et la structure porteuse (3) reposant de manière à pouvoir être déplacée longitudinalement sur les trépieds (5) peut être orientée de telle sorte que la structure porteuse (3), et moyennant quoi également le tableau d'étalonnage (2) relié à la structure porteuse (3), est orientée exactement de telle sorte que le tableau d'étalonnage (2) est disposé au centre devant le véhicule (40), moyennant quoi les lasers (32) irradient sur la même indication de distance respective des deux échelles de mesure (7, 7') disposées de part et d'autre du tableau d'étalonnage (2), puis la structure porteuse (3), moyennant quoi le tableau d'étalonnage (2), peut être fixé dans cette position centrale devant le véhicule (40) par des vis de blocage (16) correspondantes.

8. Dispositif (1) selon la revendication 7, **caractérisé en ce que** les deux échelles de mesure (7, 7') de la structure porteuse (3) sont chacune pourvues en plus d'une surface réfléchissante (18) et **en ce que** les lasers (32) disposés sur les roues arrière de l'essieu arrière du véhicule (40), au moyen des capteurs de roue (25), peuvent être orientés sur ces surfaces réfléchissantes (18) de telle sorte que les rayons laser de ces surfaces réfléchissantes (18) sont réfléchis respectivement sur les échelles de mesure (7, 7') de capteur de roue reliées aux capteurs de roue (25), dans lequel la structure porteuse (3) est réglable au moyen de coulisses (13) orientées perpendiculairement au tableau d'étalonnage (2) de telle sorte que les rayons laser réfléchis sont réfléchis respectivement sur la même indication de distance des deux échelles de mesure (7, 7') de capteur de roue, moyennant quoi le plan de tableau d'étalonnage est orienté parallèlement à l'essieu arrière non-directeur du véhicule (40).

9. Dispositif (1) selon l'une ou plusieurs des revendications précédentes, **caractérisé en ce qu'**un tableau d'étalonnage (2) spécifique au fabricant peut être fixé à la structure porteuse (3), dans lequel l'orientation correcte du tableau d'étalonnage (2), en particulier son orientation verticale, peut être vérifiée au moyen d'au moins un niveau à bulle vertical (21) relié à la structure porteuse (3).
